(19) Europäisches Patentamt / European Patent Office / Office européen des brevets

(11) **EP 2 003 431 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(51) Int Cl.:
***G01N 21/64*** *(2006.01)*     ***G01J 3/46*** *(2006.01)*
***G01N 21/25*** *(2006.01)*

(21) Anmeldenummer: **07110191.9**

(22) Anmeldetag: **13.06.2007**

(54) **Verfahren zur Farbmessung von gedruckten Proben mit Aufhellern**

Method for measuring the colour of printed samples with brighteners

Procédé destiné à la mesure de la couleur d'échantillons imprimés avec des matériaux d'éclaircissement

(84) Benannte Vertragsstaaten:
**CH DE GB LI**

(43) Veröffentlichungstag der Anmeldung:
**17.12.2008 Patentblatt 2008/51**

(73) Patentinhaber: **X-Rite Europe GmbH**
**8105 Regensdorf (CH)**

(72) Erfinder:
• **Wegmüller, Mark**
**8046, Zürich (CH)**
• **Ehbets, Peter**
**8046, Zürich (CH)**
• **Frick, Beat**
**8107, Buchs (CH)**

(74) Vertreter: **Schwabe - Sandmair - Marx**
**Patentanwälte**
**Stuntzstraße 16**
**81677 München (DE)**

(56) Entgegenhaltungen:
EP-A- 1 775 565     JP-A- 2006 084 333
US-A1- 2002 135 768

## Beschreibung

Die Erfindung betrifft ein Verfahren zur Farbmessung von auf Substraten mit Aufhellern gedruckten Proben gemäss dem Oberbegriff des unabhängigen Anspruchs 1.

Bei der Herstellung von Papieren werden häufig optische Aufheller verwendet. Optische Aufheller können den Weissgrad des Papiers (allgemein Substrats) verbessern und die Herstellungskosten senken.

Optische Aufheller absorbieren Licht im ultra-violetten (UV-) Wellenlängenbereich von 320 bis 410 nm und re-emittieren Fluoreszenzlicht im sichtbaren blauen Spektralbereich zwischen 420 bis 550 nm. Das Maximum des Fluoreszenzspektrums befindet sich zwischen 430 und 440 nm.

Der Effekt von optischen Aufhellern und die erzeugte Farbe des Papiers werden stark durch die spektrale Verteilung des Beleuchtungslichts, vor allem durch das Verhältnis der Lichtpegel im UV- und im blauen Spektralbereich beeinflusst. Die Farbwiedergabe von bedruckten Proben wird zusätzlich noch durch das Absorptionsverhalten der Farbschicht auf dem Papiersubstrat beeinflusst.

Das nicht-lineare Verhalten von optischen Aufhellern stellt hohe Anforderungen an die Farbmesstechnik. Die Ziele in der Farbmesstechnik sind einerseits Messwerte zu erhalten, die gut mit einer bestimmten visuellen Beobachtungsbedingung mit definiertem Beleuchtungsspektrum korrelieren. Andererseits ist es für die Prozesskontrolle und den Austausch von Messdaten wichtig, dass verschiedene Messgeräte auf den gleichen Proben möglichst identische Messwerte ausgeben.

Die aktuelle Situation der Farbmesstechnik ist zufrieden stellend für bedruckte Proben auf Substraten ohne optische Aufheller. Wenn optische Aufheller eingesetzt werden, treten grössere, nicht zufrieden stellende Abweichungen der Messwerte auf.

Für eine gute Geräteübereinstimmung ist es wichtig, dass die Beleuchtungsspektren in den Geräten identische relative Verteilungen im UV-Bereich und in blauen Spektralbereichen aufweisen. Vor allem im UV-Bereich treten grössere Unterschiede zwischen den verschiedenen Messgeräten auf.

Für die Kompatibilität mit der visuellen Betrachtung wird ausserdem gefordert, dass die Beleuchtungen im Gerät und für die Beobachtung identisch sind. Diese Situation ist technisch sehr anspruchsvoll zu realisieren, da die externen Beleuchtungsbedingungen variabel sind.

Aktuelle Handfarbmessgeräte, wie das SpectroEye der Firma GretagMacbeth AG, verwenden als Lichtquelle eine Glühlampe. Das Gerät besitzt ein Filterrad in der Messoptik. Mit verschiedenen Messfiltern im Filterrad kann das Beleuchtungsspektrum und die Empfängercharakteristik modifiziert werden. Für eine gute Geräteübereinstimmung wird empfohlen, aufgehellte Proben mit dem eingebauten UV-Sperrfilter zu messen. Dieser Filter eliminiert den UV-Anteil des Beleuchtungslichts, so dass der optische Aufheller keine Fluoreszenz erzeugen kann. Die Anforderungen an eine genaue Kontrolle des Beleuchtungsspektrums entfallen. Problematisch mit der UV-Sperrfilter-Methode ist aber, dass die Messwerte nicht mit realen Betrachtungsbedingungen übereinstimmen, da typische Lichtquellen meistens einen UV-Anteil aufweisen und so die Aufheller anregen.

Exakte Messresultate werden mit der sogenannten bi-spektralen Messmethode ermöglicht. Ein bi-spektrales Messgerät hat einen Monochromator in der Beleuchtungsoptik und einen spektralen Analysator im Empfängerkanal. Die Messung erfolgt sequentiell. Für jede Beleuchtungswellenlänge wird ein komplettes Reflektionsspektrum gemessen und in Matrixform abgespeichert. Durch Multiplikation der Matrix mit einem Vektor, welcher die spektrale optische Energieverteilung der geforderten Lichtart aufweist, wird das resultierende Reflektionsspektrum der Probe ermittelt. Diese Messtechnik beinhaltet keine Einschränkung; der sequentielle Messablauf ist aber zeitaufwändig. Die Messtechnik ist teuer zu realisieren, so dass sie für den industriellen Einsatz nicht in Frage kommt. Als Beispiele für ein bi-spektrales Messsystem sind die Geräte BFC-450 der Firma Labsphere und CM-3800 der Firma Minolta zu nennen.

Die US-Patentschrift Nr. 6844931 beschreibt ein Farbmesssystem mit variabler Leuchtdioden- (LED)-Beleuchtung und einem spektralen Analysator im Empfänger. Die LED-Lichtquelle besteht aus einer Vielzahl verschieden farbiger, weisser und UV-LEDs. Die einzelnen LEDs können individuell angesteuert werden, so dass elektronisch die spektrale Beleuchtungsverteilung an ein gewünschtes Spektrum angepasst werden kann. Die Bestimmung des spektralen Reflexionsfaktors der Probe wird dann mit einer einzelnen Messung mit dem gewünschten Beleuchtungsspektrum ausgeführt.

In der US-Patentanmeldung Nr. 2007/0086009 A1 (≈EP 1775565 A1) ist die Ermittelung des Reflektionsspektrums der Probe anhand einer Doppelmessung beschrieben. In der ersten Messung wird das Reflektionsspektrum mit der bekannten UV-Sperrfilter Technik ermittelt. In der zweiten Messung wird nur mit UV-Licht beleuchtet und das Fluoreszenzspektrum separat gemessen. Durch entsprechende Addition der richtig gewichteten Spektren kann sodann der Reflektionsfaktor für eine beliebige Anregungslichtart ausgegeben werden. Ein Nachteil dieser Methode ist, dass jede Probe zweimal gemessen werden muss.

Das US-Patent US-2002/0135768 A beschreibt ein Verfahren zur Farbmessung. Um einen Korrekturfaktor zu berechnen, müssen zusätzlich zum Reflexionsfaktor für die erste Beleuchtung T und der Charakterisierung des unbedruckten Papiers für jedes bedruckte Messfeld, der numerische Wert S der benutzten Grundfarben, der die Proportion des Bereiches des farbanhaftenten Teils mit Bezug auf die Gesamtfläche des gemessenen Bereiches angibt, und deren Überlappung sowie die Transmission aller benutzten Grundfarben für nicht deckende Farben über das ganze Spektrum (UV und sichtbar) bekannt seien.

Die JP-2006-084333 A beschreibt eine Vorrichtung und ein Verfahren, um eine spektrale Reflexion vorherzusagen.

Ausgehend von diesem Stand der Technik soll durch die vorliegende Erfindung ein Verfahren für die Farbmessung von aufgehellten Proben geschaffen werden, welches den totalen spektralen Reflexionsfaktor der Probe für gewünschte Ziellichtarten schnell und unter Vermeidung von Doppelmessungen bestimmen kann und dabei gleichzeitig einfach und kostengünstig in bestehenden Farbmessgeräten implementiert werden kann.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:

Fig. 1    eine schematische Darstellung der wichtigsten Komponenten einer für das erfindungsgemässe Messverfahren geeigneten Messvorrichtung,

Fig. 2    ein Blockschema eines Ausführungsbeispiels des erfindungsgemässen Messverfahrens und

Fig. 3    ein Blockschema der im erfindungsgemässen Messverfahren nach Fig. 2 verwendeten Korrekturberechnung.

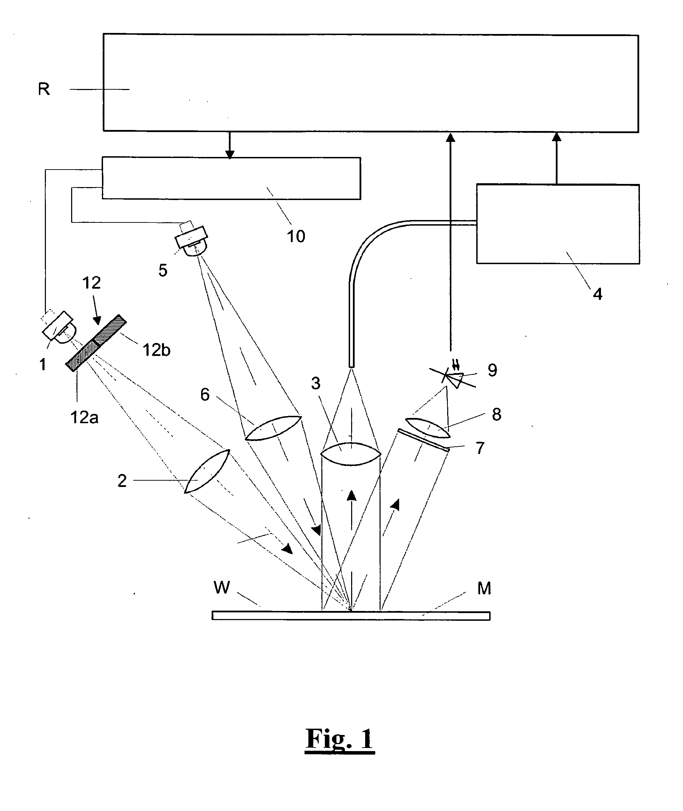

Wie weiter unten im Detail erläutert, müssen für das erfindungsgemässe Messverfahren neben den Messungen im sichtbaren Bereich auch einige (wenige) Messungen im UV-Bereich durchgeführt werden. Diese Messungen können mit separaten Messgeräten durchgeführt werden, es kann dazu aber auch eine Messvorrichtung eingesetzt werden, die für Messungen in beiden Bereichen ausgebildet ist. Die im Folgenden beispielsweise dargestellte, für das erfindungsgemässe Messverfahren geeignete Messvorrichtung ist für Messungen in beiden Bereichen ausgelegt. Sie und ihre Eichung und Kalibrierung ist in der schon erwähnten US-Patentanmeldung Nr. 2007/0086009 A1 in allen Einzelheiten beschrieben und wird hier kurz anhand der Fig. 1 erläutert.

Konkret umfasst die Messvorrichtung eine erste Lichtquelle 1, eine erste Beleuchtungsoptik 2, eine erste Aufpickoptik 3, einen ersten fotoelektrischen Wandler 4, eine zweite Lichtquelle 5, eine zweite Beleuchtungsoptik 6, einen UV-Filter 7, eine zweite Aufpickoptik 8, einen zweiten fotoelektrischen Wandler 9, eine Lampensteuerung 10 und einen Rechner R für die Steuerung der fotoelektrischen Wandler und zur Digitalisierung und weiteren Verarbeitung bzw. Speicherung der von den fotoelektrischen Wandlern erzeugten Messsignale. Die erste Lichtquelle 1, erste Beleuchtungsoptik 2, erste Aufpickoptik 3 und der erste Wandler 4 bilden zusammen eine erste, an sich bekannte Messanordnung, welche ein Messobjekt M bzw. eine Probe unter einem Einfallswinkel von 45° beleuchtet und das vom Messobjekt remittierte Messlicht unter einem Ausfallswinkel von 0° auffängt. Analog bilden die zweite Lichtquelle 5, die zweite Beleuchtungsoptik 6, der UV-Filter 7, die zweite Aufpickoptik 8 und der zweite Wandler 9 eine zweite, ebenfalls an sich bekannte Messanordnung mit hier symmetrischer Messgeometrie, wobei der Einfallswinkel der Beleuchtung und der Ausfallswinkel des remittierten Messlichts je z.B. 30° betragen.

Für die erste Lichtquelle 1 kommt typischerweise eine Lichtquelle zum Einsatz, welche ein kontinuierliches Emissionsspektrum über den UV- und sichtbaren Spektralbereich aufweist. Oft werden Xenon-Bogenlampen oder Glühlampen verwendet. Der erste fotoelektrische Wandler 4 ist vorzugsweise als spektraler Analysator ausgestaltet, welcher im Minimum über den sichtbaren Spektralbereich von 400 bis 700 nm empfindlich ist. Der spektrale Analysator kann in an sich bekannter Weise als Spektrometer oder Colorimeter ausgebildet sein. Die erste Messanordnung erfüllt, wie schon erwähnt, die geometrischen Messbedingungen der normierten 45°/0°-Geometrie.

Gemäss einer abgewandelten Ausführung der Messvorrichtung ist im Beleuchtungsstrahlengang der ersten Messanordnung eine verstellbare Filteranordnung 12 vorgesehen, die je nach Einstellung entweder nur für sichtbares Licht oder nur für UV-Licht durchlässig ist. Die Filteranordnung kann zum Beispiel durch ein Filterrad mit zwei passenden Filtern implementiert sein, so wie es im vorgenannten bekannten Gerät "SpectroEye" schon verwendet wird. Einer der beiden Filter 12a der Filteranordnung 12 ist ein UV-Sperrfilter, der als Kantenfilter ausgebildet ist, welcher Beleuchtungslicht unterhalb von 400 nm unterdrückt und eine gute Transmission über den sichtbaren Bereich aufweist. Der andere Filter 12b der Filteranordnung 12 ist ein dazu komplementärer Kantenfilter, welcher das Licht mit einer Wellenlänge oberhalb von 400 nm unterdrückt und für UV-Licht möglichst gut transparent ist. Dieser Filter (UV-Transmissionsfilter) kann auch so ausgestaltet sein, dass er eine bessere Anpassung des Beleuchtungsspektrums im UV-Bereich an eine gewünschte Referenzlichtart ermöglicht.

Eine geeignete umschaltbare UV-/Nicht-UV-Doppelbeleuchtung kann gemäss einer weiteren Abwandlung der Messvorrichtung alternativ auch mittels zweier oder mehrer unterschiedlicher Lichtquellen erfolgen, welche einzeln ein- und ausgeschaltet werden können. Ein Teil der Lichtquellen dürfen dabei nur im UV-Bereich, der andere Teil der Lichtquellen nur im sichtbaren Bereich Licht emittieren. Dies kann realisiert werden, indem kontinuierliche Lichtquellen mit fest vorgesetzten Filtern verwendet werden. Alternativ können Lichtquellen eingesetzt werden, welche ohne zusätzliche Filterung ein spektral begrenztes Emissionsspektrum aufweisen. Typische Lichtquellen dieser Art sind Leuchtdioden (LEDs). Als UV-Lichtquelle können zum Beispiel die UV-LEDs NCCU033(T) und NCCU001E des Herstellers Nichia mit Peak-Wellenlängen von 365 nm resp. 380 nm einzeln oder als Kombination eingesetzt werden. Die UV-Sperrfilter-Charakteristik kann zum Beispiel mit weissen LEDs, wie sie vom Hersteller Lumileds unter dem Produktnamen Luxeon verkauft werden, realisiert werden. Diese weissen LEDs weisen ein kontinuierliches Emissionsspektrum im Bereich 420 nm bis 700 nm auf. In der Fig. 1 ist diese Implementierungsmöglichkeit für eine Doppelbeleuchtung mit gesteuerten Lichtquellen durch Hinzuziehung der zweiten Messanordnung 5-9 symbolisiert. Dabei ist die Filteranordnung 12 dann natürlich überflüssig.

Die Beleuchtung und Messung mit UV-Licht muss die 45°/0°-Normgeometrie nicht einhalten, das Messlicht kann unter irgendeinem Winkel auf das Messobjekt aufgebracht werden. Wenn für das UV-Licht und das sichtbare Licht separate Lichtquellen verwendet werden, ist es daher möglich, die UV-Lichtquellen unter einem kleineren Winkel als 45° anzuordnen, z.B. etwa 30°, wodurch oft eine kompaktere Bauform der Messvorrichtung erreicht werden kann.

Die Messvorrichtung weist im weiteren einen Weissreferenzstandard W auf, welcher für den absoluten Reflektionsfaktor geeicht ist. Der Weissreferenzstandard kann nach bekannter Art aus einer weissen Keramikkachel bestehen, welche mit einem geeichten Referenz-Spektralphotometer geeicht worden ist. Bei Messungen am Weissreferenzstandard W tritt dieser (in an sich bekannter Weise) an die Stelle des eigentlichen Messobjekts M.

Ferner ist es erforderlich, dass die Messvorrichtung über einen UV-Referenzkanal für die UV-Lichtquelle verfügt, welcher dazu dient, den Lichtpegel der UV-Lichtquelle über die Lebensdauer des Geräts zu überwachen und Pegelschwankungen zu detektieren. Die Pegelschwankungen werden vom Messsystem bei der Messwertberechnung berücksichtigt. Der UV-Referenzkanal kann mit dem spektralen fotoelektrischen Wandler 4 realisiert werden, wenn dieser im UV-Bereich empfindlich ist und der Weissreferenzstandard W einen genügenden Reflektionsfaktor im UV-Bereich aufweist. Alternativ kann der UV-Referenzkanal mit einer Fotodiode (Wandler 9) realisiert werden, welche im UV-Bereich empfindlich ist und das vom Weissreferenzstandard reflektierte Licht misst. Eine dritte Möglichkeit für die Realisierung des UV-Referenzkanals ist der Einbau einer fluoreszierenden Probe, welche im UV-Bereich angeregt wird und Licht im sichtbaren Bereich erzeugt. Der sichtbare Fluoreszenzanteil kann dann mit dem spektralen Empfänger (Wandler 4) gemessen werden. Geeignete Fluoreszenzstandards werden zum Beispiel von der Firma Labsphere unter dem Produktnamen Spectralon angeboten.

Für die Durchführung der Messungen ist der (durch die Aufpickoptik und den spektralen Wandler gebildete) Empfängerkanal radiometrisch geeicht. Die radiometrische Eichung wird in an sich bekannter Weise durchgeführt, indem mit dem Empfängerkanal eine kontinuierliche Lichtquelle mit bekannter spektraler Signalverteilung (Referenzspektrum) gemessen wird. Die radiometrische Eichung wird in an sich bekannter Weise durch den Quotienten des Referenzspektrums durch die entsprechenden digitalisierten (spektralen) Messwerte des Empfängers gebildet.

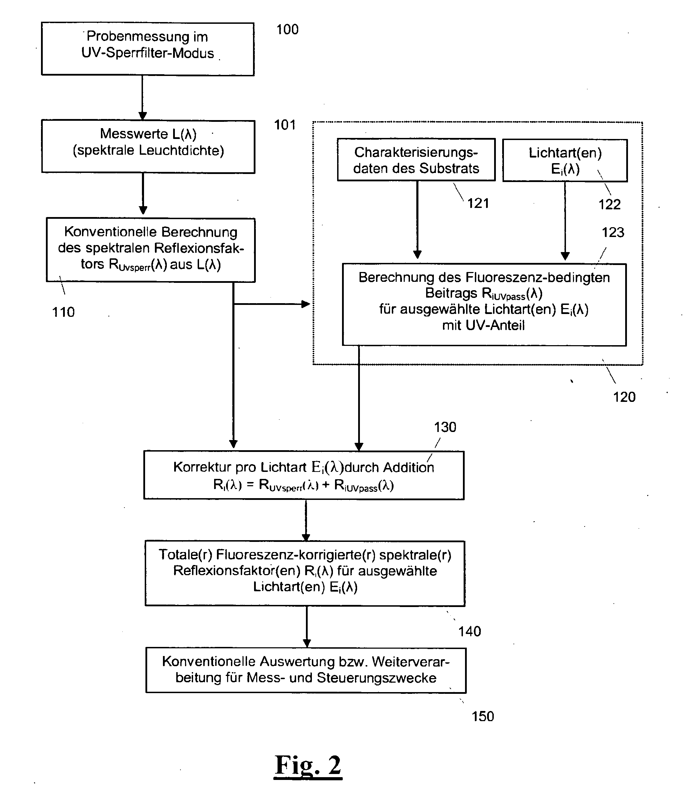

Das erfindungsgemässe Messverfahren wird im Folgenden anhand der Fig. 2 unter rein beispielsweisem Einsatz der in Fig. 1 gezeigten Messkonfiguration erläutert. Das erfindungsgemässe Messverfahren ist jedoch an alle anderen gängigen Messanordnungen bzw. Messgeräte anpassbar. Unter Messung im UV-Sperrfilter-Modus wird im Folgenden eine Messung unter Beleuchtung mit sichtbarem Licht ohne oder nur mit verschwindend kleinem UV-Anteil verstanden, unter Messung im UV-Passfilter-Modus eine Messung nur mit UV-Beleuchtung. Der UV-Sperrfilter-Modus wird beispielsweise durch Beleuchtung mit einer weissen Leuchtdiode mit verschwindendem UV-Anteil realisiert, der UV-Passfilter-Modus durch Beleuchtung mit einer reinen UV-Leuchtdiode.

Die Fig. 2 zeigt den grundsätzlichen Ablauf des erfindungsgemässen Messverfahrens.

Das Messobjekt (die Probe) wird (nur) im UV-Sperrfilter-Modus spektral ausgemessen (Kasten 100), wobei die dabei ermittelten Messwerte die spektrale Leuchtdichte $L(\lambda)$ der Probe am Messort repräsentieren (Kasten 101). Aus der spektralen Leuchtdichte $L(\lambda)$ wird in an sich bekannter Weise (anhand der schon erwähnten Weisseichung) der spektrale Reflexionsfaktor $R_{UVsperr}(\lambda)$ der Probe bestimmt (Kasten 110). Dieser spektrale Reflexionsfaktor $R_{UVsperr}(\lambda)$ bildet einen ersten spektralen Anteil am totalen spektralen Reflexionsfaktor der Probe. Zu diesem spektralen Reflexionsfaktor $R_{UVsperr}(\lambda)$ wird dann ein erfindungsgemäss berechneter spektraler Korrekturanteil bzw. Korrekturfaktor addiert (Kasten 130), welcher den vom Aufheller des Substrats des Messobjekts bei Beleuchtung mit UV-Licht verursachten, fluoreszenzbedingten Beitrag $R_{iUVpass}(\lambda)$ des totalen spektralen Reflexionsfaktors darstellt. Das Ergebnis dieser (additiven) Korrektur ist schliesslich der totale spektrale Reflexionsfaktor $R_i(\lambda)$ (Kasten 140). Die Berechnung des spektralen Korrekturanteils ist in der Fig. 2 gesamthaft durch den Kasten 120 angedeutet. Der totale spektrale Reflexionsfaktor $R_i(\lambda)$ kann anschliessend in an sich bekannter Weise für Mess- und Steuerungszwecke ausgewertet bzw. weiter verarbeitet werden (Kasten 150). Eine Auswertungsmöglichkeit ist beispielsweise die Berechnung und ggf. Anzeige der Farbwerte der Probe.

Der durch den vom Aufheller des Substrats des Messobjekts bei Beleuchtung mit UV-Anteil verursachte, fluoreszenzbedingte Beitrag $R_{iUVpass}(\lambda)$ an den totalen spektralen Reflexionsfaktor hängt primär vom Substrat des Messobjekts, d.h. vom darin enthaltenen Aufheller und von der Lichtart (spektralen Zusammensetzung) des Beleuchtungslichts, für welche der Beitrag bestimmt werden soll, ab. Für unterschiedliche Lichtarten i ergeben sich in der Regel unterschiedliche Beiträge $R_{iUVpass}(\lambda)$. Ferner wird der Beitrag durch die zusätzliche Absorption in der Farbschicht sowie durch Oberflächeneffekte am Messort beeinflusst. Der Aufheller ist normalerweise im Substrat eingebettet, kann sich aber auch in einem Anstrich (z.B. Klarlackbeschichtung) des dann selbst aufhellerfreien Substrats befinden. Das erfindungsgemässe Messverfahren ist auch für solcherart aufgehellte Substrate geeignet.

Für die Berechnung des fluoreszenzbedingten Beitrags $R_{iUVpass}(\lambda)$ müssen die Charakterisierungsdaten (spektralen Eigenschaften) des Substrats bzw. des eingesetzten Aufhellers bekannt sein. Diese werden entweder durch den Substrat-Hersteller zur Verfügung gestellt oder durch (einmalige) vorbereitende Messungen ermittelt. Näheres dazu wird weiter unten ausgeführt. Die Charakterisierungsdaten des Substrats sind in der Fig. 2 durch den Kasten 121 symbolisiert.

Ebenso müssen die Beleuchtungslichtarten, für welche die Fluoreszenz-Korrektur berechnet werden soll, festgelegt sein. In der Fig. 2 ist dies durch den Kasten 122 angedeutet. Die Lichtarten werden üblicherweise durch Emissionsspektren $E_i(\lambda)$ definiert, wobei der Index i für je eine individuelle Lichtart steht. Dementsprechend bezieht sich der Index i im Beitrag $R_{iUVpass}(\lambda)$ auf eine individuelle Lichtart i. Als Lichtarten kommen die Standard-Lichtarten gemäss CIE (z.B. D50 oder A) oder auch beliebige andere, z.B. anwendungsspezifische Lichtarten in Frage.

Einer der grossen Vorteile des erfindungsgemässen Messverfahrens ist es, dass die Fluoreszenz-Korrektur nicht nur für eine vorgegebene Lichtart bestimmt werden kann, sondern für beliebige und auch mehrere Lichtarten. Die interessierende Lichtart $E_i(\lambda)$ oder mehrere interessierende Lichtarten $E_i(\lambda)$ wird bzw. werden zu Beginn der Messung oder alternativ auch nachträglich nach der Messung) ausgewählt (Kasten 122) und für jede ausgewählte Lichtart wird die zugehörige Fluoreszenz-Korrektur $R_{iUVpass}(\lambda)$ berechnet, so dass am Ende für jede ausgewählte Lichtart $E_i(\lambda)$ ein zugehöriger totaler spektraler Reflexionsfaktor $R_i(\lambda)$ vorliegt (Kasten 140). Der durch die Summe des im UV-Sperrfilter-Modus gemessenen spektralen Reflexionsfaktors $R_{UVsperr}(\lambda)$ und des Fluoreszenz-bedingten Beitrags $R_{iUVpass}(\lambda)$ gegebene totale spektrale Reflexionsfaktor $R_i(\lambda)$ entspricht dem mit einem (filterlosen) Messgerät der jeweiligen Beleuchtungslichtart gemessenen spektralen Reflexionsfaktor.

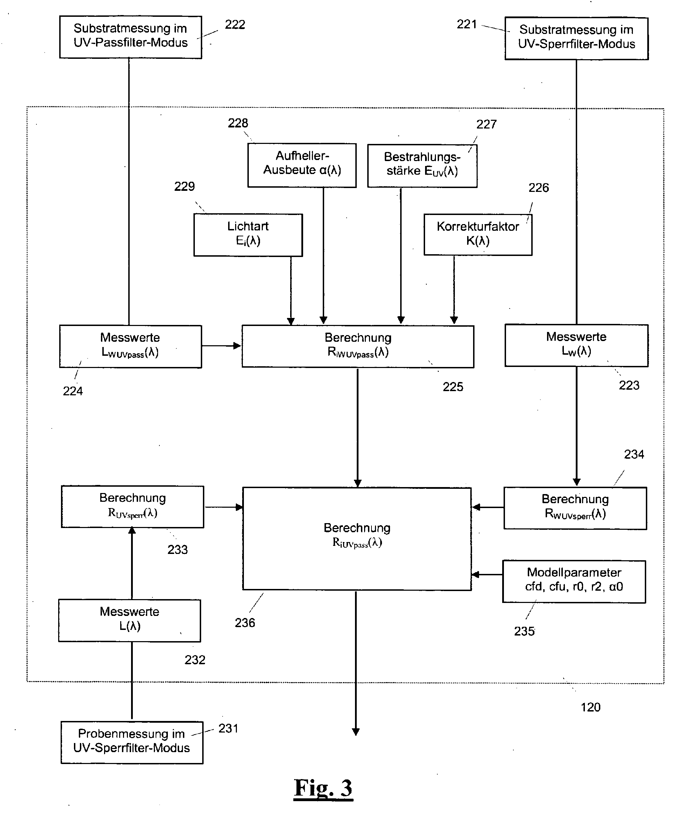

Die Fluoreszenzkorrektur bzw. der spektrale Beitrag $R_{iUVpass}(\lambda)$ wird, wie schon erwähnt, aus den Charakterisierungsdaten des Substrats (Kasten 121), den spektralen Daten der ausgewählten Lichtart $E_i(\lambda)$ (Kasten 122) und den Messwerten der Probe (spektrale Leuchtdichte $L(\lambda)$, Kasten 101) anhand eines in der Fig. 2 durch den Kasten 123 symbolisierten Modells berechnet, so wie dies nachfolgend unter Bezug auf die Fig. 3 beispielsweise näher erläutert ist.

Bei der in Fig. 3 illustrierten beispielsweisen Variante der Berechnung des Fluoreszenzkorrekturfaktors $R_{iUVpass}(\lambda)$ werden Substrat-Charakterisierungsdaten verwendet, die aus vor der Probenmessung durchgeführten Messungen am unbedruckten Substrat (Papierweiss) des Messobjekts gewonnen werden. Wie weiter unten noch ausgeführt wird, kann das erfindungsgemässe Messverfahren jedoch auch einfach auf Substrat-Charakterisierungsdaten anderer Provenienz angepasst werden.

Vor der eigentlichen Probenmessung an einem bedruckten Farbfeld des Substrats wird das Substrat des Messobjekts an einer unbedruckten Stelle desselben (Papierweiss) sowohl im UV-Sperrfilter-Modus als auch im UV-Passfilter-Modus ausgemessen (Kasten 221 und 222). Aus den im UV-Sperrfilter-Modus ermittelten Messwerten (spektrale Leuchtdichte) $L_W(\lambda)$ (Kasten 223) wird in an sich bekannter Weise der spektrale Reflexionsfaktor $R_{WUVsperr}(\lambda)$ gebildet (Kasten 234). Aus den im UV-Passfilter-Modus ermittelten Messwerten (spektrale Leuchtdichte) $L_{WUVpass}(\lambda)$ (Kasten 224) wird nach der Formel

$$R_{iWUVpass}(\lambda) = \frac{K(\lambda) \cdot L_{WUVpass}(\lambda) \cdot \pi}{E_i(\lambda)} * \frac{\int d\lambda \cdot \alpha(\lambda) \cdot E_i(\lambda)}{\int d\lambda \cdot \alpha(\lambda) \cdot E_{UV}(\lambda)} \qquad \text{[Formel 1]}$$

der Fluoreszenz-bedingte Korrekturbeitrag $R_{iWUVpass}(\lambda)$ berechnet (Kasten 225). (Der Index W kennzeichnet dabei die Messung am Substrat bzw. Papierweiss.)

In der Formel bedeuten:

$E_i(\lambda)$      die spektrale Bestrahlungsstärke der Lichtart(en) i am Messort

$E_{UV}(\lambda)$      die spektrale Bestrahlungsstärke der UV-Beleuchtung am Messort

$\alpha(\lambda)$      die spektrale Ausbeute des Aufhellers im Substrat

$L_{WUVpass}(\lambda)$      die im UV-Passfilter-Modus am Substrat ermittelten Messwerte und

$K(\lambda)$      einen spektralen Korrekturfaktor für Korrekturen zweiter Ordnung.

$K(\lambda)$ und $E_{UV}(\lambda)$ sind messgerätspezifische Daten, die bei der Herstellung, Eichung und Kalibrierung des eingesetzten Messgeräts ermittelt und gespeichert werden (Kasten 226 und 227).

Dabei korrigiert $K(\lambda)$ Unzulänglichkeiten der Eichung und des Korrekturmodells. Er wird empirisch ermittelt durch Messungen an einer bekannten aufgehellten Referenzprobe und wird dabei so bestimmt, dass der berechnete totale spektrale Reflexionsfaktor der Referenzprobe mit dem mittels eines Referenzmessgeräts derselben Lichtart gemessenen totalen spektralen Reflexionsfaktor übereinstimmt.

$\alpha(\lambda)$ wird für alle Substrate gleich gewählt, da die üblicherweise eingesetzten Aufhellier ein sehr ähnliches Absorptionsverhalten aufweisen. Typisch wird ein glockenkurvenförmiger Verlauf zugrundegelegt mit einem Zentralwert bei rund 375 nm und einer Halbwertsbreite (FWHM) von rund 80 nm. Es kann aber auch ein typischer Aufheller ausgemessen oder auf entsprechende Hersteller-Daten zurückgegriffen werden (Kasten 228).

$E_i(\lambda)$ kann durch den Anwender gewählt werden, z.B. aus den CIE Normlichtarten, oder aus einer experimentell vermessenen Lichtart (z.B. einer Leuchtbox). Wie Formel 1 zeigt, ist die absolute Skalierung von $E_i(\lambda)$ hierbei egal, nur die relative spektrale Gewichtung ist entscheidend (Kasten 229).

Aus dem Reflexionsfaktor $R_{WUVsperr}(\lambda)$ und dem berechneten Korrekturbeitrag $R_{iWUV\text{-}pass}(\lambda)$ ergibt sich durch Addition der totale spektrale Reflexionsfaktor $R_{iW}(\lambda)$ für das unbedruckte Substrat (Papierweiss):

$$R_{iW}(\lambda) = R_{WUVsperr}(\lambda) + R_{iWUVpass}(\lambda) \qquad [\text{Formel 2}]$$

Analog zur Formel 2 wird auch der totale spektrale Reflexionsfaktor der eigentlichen Messung an bedruckten Stellen (Farbfeldern) des Messobjekts berechnet. Dabei wird im Folgenden sinngemäss der Index W weggelassen, und für eine bessere Übersichtlichkeit auch die Wellenlängenabhängikeit nicht mehr explizit angegeben. In dieser vereinfachten Notation hat man:

$$R_i = R_{UVsperr} + R_{iUVpass} \qquad [\text{Formel 3}]$$

Der totale spektrale Reflexionsfaktor $R_i$ für das gemessene Farbfeld ergibt sich wieder als Summe des im UV-Sperrfilter-Modus direkt ermittelten Anteils $R_{UVsperr}$ (Kasten 233) und des berechneten Korrektur-Anteils $R_{iUVpass}$. Die Messung am Farbfeld im Sperrfiltermodus ist durch den Kasten 231 symbolisiert, die erhaltenen Messwerte $L(\lambda)$ durch den Kasten 232.

Der zu berechnende Fluoreszenz-bedingte Korrektur-Beitrag $R_{iUVpass}$ ist gegenüber dem auf Papierweiss berechneten Wert $R_{iWUVpass}$ (Formel 1) aufgrund der zusätzlichen Absorption in der Farbschicht und Oberflächeneffekten am Messort im Allgemeinen abgeschwächt. Er wird mit einem empirischen Modell berechnet (Kasten 236), das auf den bekannten Theorien nach Kubelka-Munk, Saunderson und gegebenenfalls Neugebauer für Rasterfarben aufbaut. In die Berechnung gehen, wie aus der weiter unten stehenden Formel 12 klar wird, die Werte $R_{UVsperr}$ (Kasten 233), $R_{WUVsperr}$ (Kasten 234) und $R_{iWUVpass}$ (Kasten 225) sowie diverse Modellparameter (Kasten 235) ein. Das Modell ist durch die folgende Formel definiert:

$$R_{iUVpass} = \alpha_0 * r_0 + (1-r_0)*(1-r_2) * \rho_i^+ / (1-r_2* \rho_i^+) \qquad [\text{Formel 4}]$$

Darin bedeutet $\rho_i^+$ die effektive interne Reflektivität, welche sich aus der Reflektivität des Substrats und der Transmission der Farbschicht wie folgt ergibt:

$$\rho_i^+ = T_{downwards} * \rho_{iWUVpass} * T_{upwards} \qquad [\text{Formel 5}]$$

$$\rho_{iWUVpass} = (R_{iWUVpass} - \alpha_0*r_0)/( (1-r_0)*(1-r_2)+(R_{iWUVpass}- \alpha_0*r_0)*r_2 ) \qquad [\text{Formel 6}]$$

$R_{iWUVpass}$ wurde aus der Messung am unbedruckten Substrat gemäss Formel 1 berechnet, und die Transmission durch die Farbschicht wird aus den Sperrfiltermessungen rsp. $R_{UVsperr}$ und $R_{WUVsperr}$ wie folgt berechnet:

$$T_{downwards} = [Ext_{extrapol}(\lambda_{UV})^{\wedge}0.5]^{\wedge}cfd \qquad [\text{Formel 7}]$$

$$T_{upwards} = [Ext^{0.5}]^{cfu} \qquad \text{[Formel 8]}$$

Darin bedeuten:

$\lambda_{UV}$:      Hauptwellenlänge der UV-Lichtquelle

$T_{downwards}$:      Transmissivität der Farbschicht in Lichteintrittsrichtung bei UV-Wellenlänge $\lambda_{UV}$ (gilt für schmalbandige UV-Anregung, ansonsten müssten die entsprechenden Integralformen benutzt werden)

$T_{upwards}$:      Transmissivität der Farbschicht in Lichtaustrittsrichtung bei Fluoreszenz-Wellenlängen

Ext:      Extinktion, aus Kubelka-Munk mit Saunderson Korrektur Standardmodell mit S=0

cfd, cfu:      empirisch bestimmte Gewichtungsfaktoren, typische Werte sind cfd=4, cfu=2.5

Der Wert Ext wird wie folgt berechnet:

$$Ext = (\rho_F / \rho_W) \qquad \text{[Formel 9]}$$

worin die Zwischenwerte $\rho_W$ und $\rho_F$ nach den folgenden Formeln berechnet werden:

$$\rho_W = ( R_{WUVsperr} - \alpha_0 {}^* r_0)/( (1-r_0)^*(1-r_2)+(R_{WUVsperr} - \alpha_0 {}^* r_0)^* r_2 ) \qquad \text{[Formel 10]}$$

$$\rho_F = ( R_{UVsperr} - \alpha_0 {}^* r_0)/( (1-r_0)^*(1-r_2)+( R_{UVsperr} - \alpha_0 {}^* r_0)^* r_2 ) \qquad \text{[Formel 11]}$$

Typische Werte für die in den Kubelka-Munk Formeln verwendeten Parameter sind $r_0 = 0.04$, $r_2 = 0.6$ und $\alpha_0 = 0$.

Die konstanten Werte cfd, cfu, $r_0$, $r_2$ und $\alpha_0$ sind die vorstehend genannten Modellparameter (Kasten 235).

Die vorstehenden Berechnungsformeln 4-11 lassen sich wie folgt zusammenfassen:

$$R_{iUVpass} = F(R_{UVsperr}, R_{WUVsperr}, R_{iWUVpass}, cfd, cfu, r_0, r_2, \alpha_0) \qquad \text{[Formel 12]}$$

Man sieht daraus, dass der spektrale Korrekturanteil $R_{iUVpass}$ für ein gemessenes Farbfeld durch den am Farbfeld gemessenen ersten spektralen Anteil $R_{UVsperr}$ des totalen Reflexionsfaktors und den entsprechenden, am unbedruckten Substrat gemessenen Anteil $R_{WUVsperr}$ und den für das unbedruckte Substrat ermittelten Korrekturanteil $R_{iWUVpass}$ sowie die Modellparameter cfd, cfu, $r_0$, $r_2$ und $\alpha_0$ vollständig bestimmt ist. Die am unbedruckten Substrat gemessenen bzw. berechneten Anteile $R_{WUVsperr}$ und $R_{iWUVpass}$ repräsentieren die Fluoreszenzwirkung des Substrats und stellen somit die erwähnten Charakterisierungsdaten dar.

Wie man aus der obigen Berechnungsformel 7 erkennt, erfolgt die Charakterisierung der UV Transmission der Farbschichten mittels Extrapolation ($Ext_{extrapol}(\lambda_{UV})$), aus der UV-Sperrfiltermessung. Während die Transmission der Farbe im Fluoreszenzbereich (380-600nm) für $T_{upwards}$ direkt aus dem Standard-Modell bestimmt werden kann, steht die Absorption im UV Bereich (300-420nm) für UV Quellen mit $\lambda_{UV}<380nm$ nicht direkt zur Verfügung, da dort keine UV Sperrfilter Messdaten vorliegen. In diesem Fall kann der Wert durch geeignete Extrapolation (z.B mittels quadratischem Polynom) der bekannten Farbtransmission im UV-Sperrfilter Messbereich gewonnen werden. Eine andere Möglichkeit wäre, eine look-up Tabelle mit für die Anwendung typischen Farben zu benützen. Die Tabelle kann generisch sein, oder durch eine für die Anwendung spezifische, einmalige Kalibrationsmessung bestimmt werden.

Wie aus den vorstehenden Erläuterungen hervorgeht, basiert das erfindungsgemässe Messverfahren auf der Charakterisierung des im Substrat enthaltenen Aufhellers mit einem stark reduzierten Probenset (im Extremfall, wie beschrieben, mit einer einzigen Probe, dem Papierweiss). Alternativ kann der Aufheller auch durch eine externe Messmethodik (z.B. Bi-Spektrale Methode, UV-Cut und ein filterloses (NoF) Messgerät oder Kenntnis der spektralen UV-Effizienz des Aufhellers aus Hersteller-Daten) charakterisiert werden.

Anstatt sich auf eine Messung am unbedruckten Substrat zu beschränken, kann die Charakterisierung des Substrats bzw. dessen Aufhellers auch aufgrund von entsprechenden Messungen an einem (beschränkten) Proben-Set erfolgen. Als Proben-Set können dazu beispielsweise auch (einige wenige) Vollton- und/oder Halbtonfelder herangezogen werden. Ferner kann die Charakterisierung durch Messungen an geeigneten Kalibrationsfeldern des Messobjekts erfolgen, u.a. auch durch Messungen unter zwei Beleuchtungslichtarten mit unterschiedlichem UV-Anteil. Als Kalibrationsfelder können dabei die Felder eines auf vielen Messobjekten enthaltenen Druckkontrollstreifens verwendet werden. Die genannten alternativen Methoden zur Substrat-Charakterisierung bedingen natürlich eine sinngemässe Anpassung des zum Einsatz kommenden Korrekturmodells.

Die mittels der bekannten UV-Sperrfiltermesstechnik gemessenen Reflexionsspektren (spektrale Reflexionsfaktoren) werden mithilfe der Aufhellercharakterisierung rechnerisch auf eine beliebige Anregungslichtart (CIE-A, D50, experimentell bestimmte Leuchtbox-Spektren, etc.) umgerechnet (vgl. Formel 1). Das erfindungsgemässe Messverfahren weist die Vorteile einer Doppelmessung auf, benötigt diese physisch aber nur auf einem stark reduzierten Probenset, was den Messablauf bis um 50% beschleunigt.

Das erfindungsgemässe Messverfahren kann relativ einfach in bestehenden Geräten mit wechselbaren Messfiltern (z.b. SpectroEye) oder unterschiedlichen Lichtquellen (UV und weisse LED, z.B. iSis) implementiert werden, und führt zu einem wesentlich schnelleren Messablauf..

Durch die separate Charakterisierung von Fluoreszenzspektrum und UV-Sperrfilter Messung entfällt die Anforderung an eine gute spektrale Übereinstimmung des Beleuchtungsspektrums im Gerät. Deshalb kann eine sehr hohe Geräteübereinstimmung erzielt werden.

Es können selbst bestehende UV-Sperrfilter-Messgeräte und Messabläufe verwendet werden. Die Aufhellerantwort des Papiers wird in diesem Fall ausserhalb des eigentlichen Messablaufs bestimmt. Dies kann durch ein externes Messgerät mit bekanntem Aufhelleranteil, durch eine Bi-Spektrale Messung oder durch die externe Papierspezifikation (z.B. vom Hersteller) erfolgen.

Die vorgeschlagene Methode ist auch vorteilhaft für die Anwendung in einem automatisierten Farbmesssystem für das Einmessen von gedruckten Farbcharts für die Kalibrierung von Druckern. In diesem Fall kann die Präzision der Voraussagen nochmals erhöht werden, indem einerseits ein bekanntes Set an Kontroll-Patches mit Voll- und Rastertönen für die Auftiellercharakterisierung ausgewählt werden kann, und andererseits die gedruckten Farbwerte (z.B. cmyk) zur Verfügung stehen. Anhand der Resultate können mit einer Color Management Software Farbprofile für verschiedene Lichtarten generiert werden.

Die Methode ist auch für den Drucksaal geeignet. Beim Einrichten des Jobs, im Speziellen bei der Messung eines ersten Druckbogens, kann eine komplette Doppelmessung am ganzen Objekt erfolgen, da etwas mehr Zeit zur Verfügung steht. Die komplette Doppelmessung beinhaltet Weissmessung mit und ohne UV zur Substrat-Charakterisierung und das Einmessen des Druckkontrollstreifens mit und ohne UV. Im Minimum muss nur die Substratmessung mit und ohne UV erfolgen. Anhand dieser Daten werden die Modellparameter zur Fluoreszenzkorrektur bestimmt. Beim in Farbe Fahren der Druckmaschine muss dann die Messung schnell gehen. Es wird nur ein Messlauf pro Bogen ohne UV durchgeführt. Die vorgeschlagene Methode wird benutzt, um die spektralen Reflexionsfaktoren mit Fluoreszenzanteil entsprechend der gewünschten Beleuchtung zu berechnen.

## Patentansprüche

1. Verfahren zur Farbmessung von auf Substraten mit Aufhellern gedruckten Proben, wobei der totale spektrale Reflexionsfaktor $R_i(\lambda)$ einer Probe ermittelt und für die Berechnung von die Farbe der Probe charakterisierenden Werten zur Verfügung gestellt wird, und wobei der totale spektrale Reflexionsfaktor $R_i(\lambda)$ als Summe (130) eines ersten spektralen Anteils $Ruv_{spen}(\lambda)$ und eines spektralen Korrekturanteils $Ri_{UVpass}(\lambda)$ gebildet wird, welcher erste spektrale Anteil $R_{UVsPerr}(\lambda)$ den unter Beleuchtung mit im Wesentlichen UV-freien Licht ermittelten (100, 101, 110; 231, 232, 233) spektralen Reflexionsfaktor der Probe darstellt und welcher spektrale Korrekturanteil $R_{iuvpass}(\lambda)$ den nur durch die Fluoreszenzwirkung des Aufhellers bedingten Beitrag (123) am totalen spektralen Reflexionsfaktor $R_i(\lambda)$ der Probe darstellt,

   wobei der spektrale Korrekturanteil $R_{iUVpass}(\lambda)$ aus gegebenen oder gemessenen Charakterisierungsdaten $R_{iWUVpass}(\lambda)$, $R_{WUVsperr}(\lambda)$ (121) des unbedruckten Substrats bzw. des darin enthaltenen Aufhellers und einem gegebenen Spektrums einer frei wählbaren, virtuellen Beleuchtungslichtart $E_i(\lambda)$ (122) aus dem ersten spektralen Anteil $R_{uvspen}(\lambda)$ berechnet (123) wird, wobei zur Berechnung (236) des spektralen Korrekturanteils $R_{iUVpass}(\lambda)$ eine relative spektrale Gewichtung des Spektrums der gewählten Beleuchtungslichtart $E_i(\lambda)$ verwendet wird;

   wobei zur Messung der Charakterisierungsdaten $R_{iWUVpass}(\lambda)$, $R_{WUsperr}(\lambda)$ (121) des Substrats bzw. des darin enthaltenen Aufhellers folgende Schritte an einem beschränkten Set von Messfeldem durchgeführt werden:

   a) Messung (221, 223) einer ersten spektralen Leuchtdichte $L_w(\lambda)$ unter Beleuchtung mit im Wesentlichen UV-freiem Licht;

   b) Berechnung (234) des spektralen Reflexionsfaktors $R_{WUVsperr}(\lambda)$ aus der gemessenen spektralen Leuchtdichte $L_W(\lambda)$;

   c) Messung (222, 224) einer zweiten spektralen Leuchtdichte $L_{WUVpass}(\lambda)$ unter Verwendung einer UV-Lichtquelle; und

d) Berechnung (225) eines Fluoreszenz-bedingten Korrekturbeitrags $R_{iUVpass}(\lambda)$ aus einer virtuellen spektralen Bestrahlungsstärke $E_i(\lambda)$ der gewählten Beleuchtungslichtart am Messort (229), einer realen spektralen Bestrahlungsstärke $E_{UV}(\lambda)$ der UV-Beleuchtung am Messort (227), einer spektralen Ausbeute des Aufhellers $\alpha(\lambda)$ im Substrat (228), die gemessene zweite spektrale Leuchtdichte $L_{WUVpass}(\lambda)$ (224) und einem spektralen Korrekturfaktor $K(\lambda)$ (226), wobei die Berechnung des Fluorezenz-bedingten Korrekturbeitrags $R_{iUVpass}(\lambda)$ gemäß der Formel

$$R_{iWUVpass}(\lambda) = \frac{K(\lambda) \cdot L_{WUVpass}(\lambda) \cdot \pi}{E_i(\lambda)} * \frac{\int d\lambda \cdot \alpha(\lambda) \cdot E_i(\lambda)}{\int d\lambda \cdot \alpha(\lambda) \cdot E_{UV}(\lambda)}$$

durchgeführt wird,

wobei der spektrale Korrekturanteil $R_{iUVpass}(\lambda)$ der Probe mit einem empirischen Modell berechnet (236) wird, welches den ersten spektralen Anteil $R_{UVsperr}(\lambda)$ der Probe (233), den spektralen Reflexionsfaktor $R_{WUVsperr}(\lambda)$ (234), den Fluoreszenz-bedingten Korrekturbeitrag $R_{iUVpass}(\lambda)$ (225) und Modellparameter (235) verwendet, wobei die Berechnung des spektralen Korrekturanteils $Ri_{UVpass}(\lambda)$ nach der Formel

$$R_{iUVpass} = \alpha_0 * r_0 + (1-r_0)*(1-r_2) * \rho_i^+ / (1-r_2 * \rho_i^+)$$

erfolgt, worin $p_1^+$ die effektive interne Reflektivität bedeutet, welche sich aus der Reflektivität des Substrats und der Transmission der Farbschicht ergibt, und $\alpha_0$, $r_0$ und $r_2$ konstante Werte sind, wobei $\rho_i^+$ nach der Formel

$$\rho_i^+ = T_{downwards} * \rho_{iWUVpass} * T_{upwards}$$

berechnet wird, wobei

$$\rho_{iWUVpass} = (R_{iWUVpass} - \alpha_0 * r_0) / ((1-r_0)*(1- r_2)+(R_{iWUVpass} - \alpha_0 * r_0)* r_2)$$

ist,

wobei $R_{iUVpass}$ aus der Messung am Substrat berechnet ist, und die Transmission durch die Farbschicht aus den Sperrfiltermessungen wie folgt berechnet ist

$$T_{downwards} = [Ext_{extrapol}(\lambda_{UV})^{\wedge}0.5]^{\wedge}cfd$$

$$T_{upwards} = [Ext^{\wedge}0.5]^{\wedge}cfu$$

darin bedeuten:

$\lambda_{UV}$: Hauptwellenlänge der UV-Lichtquelle,
$T_{downwards}$: Transmissivität der Farbschicht in Lichteintrittsrichtung,
$T_{upwards}$: Transmissivität der Farbschicht in Lichtaustrittsrichtung bei Fluoreszenz- Wellenlängen,
Ext: Extinktion, und
cfd, cfu: Gewichtungsfaktoren,

wobei der Wert Ext wie folgt berechnet wird

$$\text{Ext} = (\rho_F / \rho_W)$$

worin die Zwischenwerte $\rho_W$ und $\rho_F$ nach den folgenden Formeln berechnet werden:

$$\rho_W = (R_{WUVsperr} - \alpha_0 * r_0)/((1 - r_0)*(1-r_2)+(R_{WUVsperr} - \alpha_0 * r_0)*r_2)$$

$$\rho_F = (R_{UVsperr} - \alpha_0 * r_0)/((1 - r_0)*(1-r_2)+(R_{UVsperr} - \alpha_0 * r_0)*r_2)$$

wobei cfd, cfu, $r_0$, $r_2$ und $\alpha_0$ konstante Werte sind, die Modellparameter repräsentieren,
wobei der totale spektrale Reflexionsfaktor $R_i(\lambda)$ der Probe durch Addition des ersten spektralen Anteils $R_{UVsperr}(\lambda)$ der Probe und des spektralen Korrekturanteils $Ri_{UVpass}(\lambda)$ der Probe berechnet wird.

2. Verfahren nach Anspruch 1, **dadurch gekennzeichnet, dass** die Charakterisierungsdaten (121) des Substrats durch zwei Reflexionsfaktor-Messungen, einmal mit Beleuchtungslicht ohne oder mit vernachlässigbarem UV-Anteil (211) und einem im wesentlichen nur mit UV-Beleuchtungslicht (222), an einem beschränkten Satz von Messfeldem ermittelt werden.

3. Verfahren nach Anspruch 2, **dadurch gekennzeichnet, dass** der beschränkte Satz von Messfeldem Druckkalibrationsfelder eines Druckkonstrollstreifens umfasst.

4. Verfahren nach Anspruch 2, **dadurch gekennzeichnet, dass** der beschränkte Satz von Messfeldem nur eine unbedruckte Zone auf dem Substrat umfasst.

5. Verfahren nach einem der vorangehenden Ansprüche, **dadurch gekennzeichnet, dass** für die Berechnung (236) des spektralen Korrekturanteils $Ri_{UVpass}(\lambda)$ die UV-Transmission der Farbschichten der Probe aus dem ersten spektralen Anteil $R_{iUVsperr}(\lambda)$ bestimmt wird.

6. Verfahren nach Anspruch 5, **dadurch gekennzeichnet, dass** die Bestimmung der UV-Transmission der Farbschichten durch Extrapolation oder mittels einer Look-Up-Tabelle erfolgt.

7. Verfahren nach einem der vorhergehenden Ansprüche, **dadurch gekennzeichnet, dass** das Korrekturmodell auf den Theorien von Kubelka-Munk, Saunderson und ggf. Neugebauer basiert.

8. Verfahren nach einem der vorhergehenden Ansprüche, **dadurch gekennzeichnet, dass** zwei oder mehrere totale spektrale Reflexionsfaktoren $R_i(\lambda)$ ermittelt werden, indem zwei bzw. mehrere spektrale Korrekturanteile $R_{iUVpass}(\lambda)$ für zwei bzw. mehrere gewählte Beleuchtungslichtarten unter Berücksichtigung der Charakterisierungsdaten des Substrats aus dem ersten spektralen Anteil $R_{UVsperr}(\lambda)$ berechnet werden.

9. Verfahren nach einem der vorangehenden Ansprüche, **dadurch gekennzeichnet, dass** die Charakterisierungsdaten (121) des Substrats bzw. des darin enthaltenen Aufhellers durch Messungen mit einem separaten Messgerät ermittelt werden oder bekannte Charakterisierungsdaten (121) des Substrats für die Berechnung des spektralen Korrekturanteils $R_{iUVpass}(\lambda)$ verwendet werden.

## Claims

1. A method of measuring the colour of samples printed on substrates with brighteners, wherein the total spectral reflection factor $R_i(\lambda)$ of a sample is determined and is made available for the calculation of values characterizing the colour of the sample, and wherein the total spectral reflection factor $R_i(\lambda)$ is formed as the sum (130) of a first spectral portion $R_{UVsperr}$ $(\lambda)$ and a spectral correction portion $R_{iUVpass}(\lambda)$, which first spectral portion $R_{UVsperr}$ $(\lambda)$ represents the spectral reflection factor of the sample determined (100, 101, 110; 231, 232, 233) under illumination with essentially UV-free light and which spectral correction portion $R_{iUVpass}(\lambda)$ represents the contribution (123) produced only by the fluorescence effect of the brightener on the total spectral reflection factor $R_i$ $(\lambda)$ of the sample; wherein the spectral correction portion $R_{iUVpass}(\lambda)$ is calculated (123) from given or measured characterizing data $R_{iUVpass}(\lambda)$, $R_{WUvsperr}(\lambda)$ (121) of the non-printed substrate or the brightener contained therein and a given spectrum of a freely selectable virtual type of illumination light $E_i$ $(\lambda)$ (122) of the first spectral portion $R_{UVsperr}$ $(\lambda)$, wherein a relative spectral weighting of the spectrum of the selected type of illumination light $E_i$ $(\lambda)$ is used to calculate (236) the spectral correction portion $R_{iUVpass}(\lambda)$,

wherein in order to measure the characterizing data $R_{iWUVpass}(\lambda)$, $R_{iWUVpass}(\lambda)$ (121) of the substrate or the brightener contained therein the following steps are carried out on a limited set of measuring fields:

a) measurement (221, 223) of a first spectral light density $L_W(\lambda)$ under illumination with substantially UV-free light;
b) calculation (234) of the spectral reflection factor $R_{WUVSperr}(\lambda)$ from the measured spectral light density $L_W$ $(\lambda)$;
c) measurement (222, 224) of a second spectral light density $L_{WUVpass}(\lambda)$ whilst using an UV light source, and
d) calculation (225) of a fluorescence-produced correction contribution $R_{iWUVpass}(\lambda)$ from a virtual spectral irradiance $E_i(\lambda)$ of the selected type of illumination light at the measurement location (229), a real spectral irradiance $E_{UV}(\lambda)$ of the UV illumination at the measurement location (227), a spectral yield of the brightener $\alpha$ $(\lambda)$ in the substrate (228), the measured second spectral light density $L_{WUVpass}(\lambda)$ (224) and a spectral correction factor $K(\lambda)$ (226), wherein the calculation of the fluorescence-produced correction contribution $R_{iWUVpass}(\lambda)$ is carried out in accordance with the formula

$$R_{iWUVpass}(\lambda) = \frac{K(\lambda) : L_{WUVpass}(\lambda) \cdot \pi}{E_i(\lambda)} * \frac{\int d\lambda \cdot \alpha(\lambda) \cdot E_i(\lambda)}{\int d\lambda \cdot \alpha(\lambda) \cdot E_{UV}(\lambda)}$$

wherein the spectral correction portion $R_{iUVpass}(\lambda)$ of the sample is calculated (236) with an empirical model which uses the first spectral portion $R_{UVsperr}(\lambda)$ of the sample (233), the spectral reflection factor $R_{WUVsperr}(\lambda)$ (234), the fluorescence-produced correction contribution $R_{iWUVpass}(\lambda)$ (225) and model parameters (235), wherein the calculation of the spectral correction portion $R_{iUVpass}(\lambda)$ is carried out in accordance with the formula

$$R_{iUVpass} = \alpha_0 * r_0 + (1-r_0)*(1-r_2) * \rho_i^+ / (1-r_2* \rho_i^+)$$

in which $\rho_i^+$ signifies the effective internal reflectivity which is formed from the reflectivity of the substrate and the transmission of the colour coating, and $\alpha_0$, $r_0$ and $r_2$ are constant values, wherein $\rho_i^+$ is calculated in accordance with the formula

$$\rho_i^+ = T_{downwards} * \rho_{iWUVpass} * T_{upwards}$$

in which

$$\rho_{iWUVpass} = (R_{iWUVpass} - \alpha_0 * r_0) / ((1-r_0)*(1- r_2)+(R_{iWUVpass} - \alpha_0 * r_0)* r_2)$$

wherein $R_{iWUVpass}$ is calculated from the measurement on the substrate, and the transmission through the colour coating is calculated from the blocking filter measurements as follows

$$T_{downwards} = [Ext_{extrapol}(\lambda_{UV})^{\wedge}0.5]^{\wedge}cfd$$

$$T_{upwards} = [Ext^{\wedge}0.5]^{\wedge}cfu$$

in which the following signify:

λ$_{UV}$ main wavelength of the UV light source,
T$_{downwards}$ transmissivity of the colour coating in the light entry direction,
T$_{upwards}$ transmissivity of the colour coating in the light exit direction in the case of fluorescence wave lengths,
Ext extinction, and
cfd, cfu weighting factors,

wherein the value Ext is calculated as follows

$$Ext = (\rho_F/\rho_W)$$

in which the intermediate values ρ$_W$ and ρ$_F$ are calculated in accordance with the following formulae

$$\rho_W = (R_{WUVsperr} - \alpha_0 * r_0)/((1- r_0)*(1-r_2)+( R_{WUVsperr} - \alpha_0 * r_0)*r_2)$$

$$\rho_F = (R_{UVsperr} - \alpha_0 * r_0)/((1- r_0)*(1-r_2)+( R_{UVsperr} - \alpha_0 * r_0)*r_2)$$

in which cfd, cfu, r$_0$, r$_2$ and α$_0$ are constant values which represent model parameters, wherein the total spectral reflection factor R$_i$(λ) of the sample is calculated by the addition of the first spectral portion R$_{UVsperr}$(λ) of the sample and the spectral correction portion R$_{iUVpass}$(λ) of the sample.

2. A method according to claim 1, **characterized in that** the characterizing data (121) of the substrate are determined by two reflection factor measurements, one with illumination light without or with a negligible UV portion (211) and one essentially only with UV illumination light (222), on a limited set of measuring fields.

3. A method according to claim 2, **characterized in that** the limited set of measuring fields comprises print calibration fields of a print control strip.

4. A method according to claim 2, **characterized in that** the limited set of measuring fields comprises only one non-printed zone on the substrate.

5. A method according to any one of the preceding claims, **characterized in that** in order to calculate (236) the spectral correction portion R$_{iUVpass}$(λ) the UV transmission of the colour coatings of the sample is determined from the first spectral portion R$_{UVpass}$(λ).

6. A method according to claim 5, **characterized in that** the determination of the UV transmission of the colour coatings is carried out by extrapolation or by means of a look-up table.

7. A method according to any one of the preceding claims, **characterized in that** the correction model is based upon the theories of Kubelka-Munk, Saunderson and optionally Neugebauer.

8. A method according to any one of the preceding claims, **characterized in that** two or more total spectral reflection factors R$_i$(λ) are determined, **in that** two or more spectral correction portions R$_{iUVpass}$(λ) for two or more selected types of illumination light are calculated from the first spectral portion R$_{UVpass}$(λ) whilst taking into consideration the characterizing data of the substrate.

9. A method according to any one of the preceding claims, **characterized in that** the characterizing data (121) of the substrate or the brightener contained therein are determined by measurements with a separate measuring instrument or known characterizing data (121) of the substrate are used for calculating the spectral correction portion $R_{iUVpass}(\lambda)$.

## Revendications

1. Procédé pour la colorimétrie d'échantillons imprimés d'agents d'azurage sur un support, dans lequel le facteur de réflexion spectral total $R_i(\lambda)$ d'un échantillon est déterminé et est mis à disposition pour le calcul de valeurs caractérisant la couleur de l'échantillon, et dans lequel le facteur de réflexion spectral total $R_i(\lambda)$ est formé par la somme (130) d'une première partie spectrale $R_{UVsperr}(\lambda)$ et d'une partie de correction spectrale $R_{iUVpass}(\lambda)$, laquelle première partie spectrale $R_{UVpass}(\lambda)$ représentant le facteur de réflexion spectrale de l'échantillon, déterminé par éclairage avec une lumière essentiellement exempte d'UV (100, 101, 110 ; 231, 232, 233), et laquelle partie de correction spectrale $R_{iUVpass}(\lambda)$ représentant la contribution (123), qui n'est due qu'à l'effet de fluorescence de l'agent d'azurage, au facteur de réflexion spectral total $R_i(\lambda)$ de l'échantillon,

   la partie de correction spectrale $R_{iUVpass}(\lambda)$ étant calculée à partir de données de caractérisation prédéfinies ou mesurées $R_{iUVpass}(\lambda)$, $R_{WUVsperr}(\lambda)$ (121) du support non imprimé ou de l'agent d'azurage qui y est contenu, et d'un spectre prédéfini d'un illuminant virtuel, sélectionnable à volonté, $E_i(\lambda)$ (122) à partir de la première partie spectrale $R_{UVsperr}(\lambda)$ (123), auquel cas, pour le calcul (236) de la partie de correction spectrale $R_{iUVpass}(\lambda)$, on utilise une pondération spectrale du spectre de l'illuminant sélectionné $E_i(\lambda)$

   où, pour la mesure de données de caractérisation $R_{iUVpass}(\lambda)$, $R_{WUVsperr}(\lambda)$ (121) du support ou de l'agent d'azurage qui y est contenu, on procède aux étapes suivantes, sur un ensemble limité de champs de mesure :

   a) mesure (221, 223) d'une première luminance spectrale $L_W(\lambda)$, sous un éclairage utilisant pour l'essentiel une lumière sans UV ;
   b) calcul (234) du facteur de réflexion spectrale $R_{WUVsperr}(\lambda)$ à partir de la luminance spectrale mesurée $L_W(\lambda)$ ;
   c) mesure (222, 224) d'une deuxième luminance spectrale $L_{WUVpass}(\lambda)$ par utilisation d'une source de lumière UV ; et
   d) calcul (225) d'une contribution de correction due à la fluorescence $R_{iUVpass}(\lambda)$ à partir d'un éclairement spectral virtuel $E_i(\lambda)$ de l'illuminant sélectionné sur le point de mesure (229), d'un éclairement spectral réel $E_{UV}(\lambda)$ de l'éclairage UV au point de mesure (227), d'un rendement spectral de l'agent d'azurage $\alpha(\lambda)$ dans le substrat (228), de la deuxième luminance spectrale mesurée $L_{WUVpass}(\lambda)$ (224) et d'un facteur de correction spectrale $K(\lambda)$ (226), le calcul de la contribution de correction due à la fluorescence $R_{iWUVpass}(\lambda)$ étant effectué conformément à la formule suivants :

$$R_{iWUVpass}(\lambda) = \frac{K(\lambda) : L_{WUVpass}(\lambda) \cdot \pi}{E_i(\lambda)} \cdot \frac{\int d\lambda \cdot \alpha(\lambda) \cdot E_i(\lambda)}{\int d\lambda \cdot \alpha(\lambda) \cdot E_{UV}(\lambda)}$$

   la partie de correction spectrale $R_{iUVpass}(\lambda)$ de l'échantillon étant calculée (236) avec un modèle empirique qui utilise la première partie spectrale $R_{UVsperr}(\lambda)$ de l'échantillon (233), le facteur de réflexion spectrale $R_{WUVsperr}(\lambda)$ (234), la contribution de correction due à la fluorescence $R_{iWUVpass}(\lambda)$ (225) et un paramètre modèle (235),
   le calcul de la partie de correction spectrale $R_{iUVpass}(\lambda)$ étant effectué selon la formule :

$$R_{iUVpass} = \alpha_0 * r_0 + (1-r_0)*(1-r_2) * \rho_i^+ / (1-r_2 * \rho_i^+)$$

   dans laquelle $\rho_i^+$ est la réflectivité interne effective qui résulte de la réflectivité du substrat et de la transmission de la couche colorée, et $\alpha_0$, $r_0$ et $r_2$ sont des constantes,
   où $\rho_i^+$ est calculé par la formule :

$$\rho_i^+ = T_{downwards} * \rho_{iWUVpass} * T_{upwards}$$

dans laquelle

$$\rho_{iWUVpass} = (R_{iWUVpass} - \alpha_0 * r_0) / ((1-r_0)*(1-r_2)+(R_{iWUVpass} - \alpha_0 * r_0)* r_2)$$

où $R_{iWUVpass}(\lambda)$ est calculé à partir de la mesure sur le support, et la transmission à travers la couche colorée est calculée comme suit à partir de mesures au filtre d'arrêt :

$$T_{downwards} = [Ext_{extrapol}(\lambda_{UV})^{\wedge}0.5]^{\wedge}cfd$$

$$T_{upwards} = [Ext^{\wedge}0.5]^{\wedge}cfu$$

dans laquelle :
$\lambda_{UV}$ est la longueur d'onde principale de la source de lumière UV,
$T_{downwards}$ est le facteur de transmission de la couche colorée dans la direction d'entrée de la lumière,
$T_{upwards}$ est le facteur de transmission de la couche colorée dans la direction de sortie de la lumière, pour les longueurs d'onde de fluorescence,
Ext : extinction, et
cfd, cfu : facteurs de pondération,
la valeur Ext étant calculée comme suit :

$$Ext = (\rho_F / \rho_W)$$

les valeurs intermédiaires $\rho_W$ et $\rho_F$ étant calculées par les formules suivantes :

$$\rho_W = (R_{WUVsperr} - \alpha_0 * r_0)/((1-r_0)*(1-r_2)+(R_{WUVsperr} - \alpha_0 * r_0)*r_2)$$

$$\rho_F = (R_{UVsperr} - \alpha_0 * r_0)/((1-r_0)*(1-r_2)+(R_{UVsperr} - \alpha_0 * r_0)*r_2)$$

où cfd, cfu, $r_0$, $r_2$ et $\alpha_0$ sont des constantes qui représentent des paramètres modèles,
le facteur de réflexion spectral total $R_i(\lambda)$ de l'échantillon étant calculé par addition de la première partie spectrale $R_{UVsperr}(\lambda)$ de l'échantillon et de la partie de correction spectrale $R_{iUVpass}(\lambda)$ de l'échantillon.

2. Procédé selon la revendication 1, **caractérisé en ce que** les données de caractérisation (121) du support sont déterminées par deux mesures du facteur de réflexion, une fois avec une lumière d'éclairage sans ou avec une partie UV négligeable (211) et pour l'essentiel seulement avec une lumière d'éclairage UV (222), sur un ensemble limité de champs de mesure.

3. Procédé selon la revendication 2, **caractérisé en ce que** l'ensemble limité de champs de mesure comprend des champs d'étalonnage de la pression d'une bandelette de contrôle de pression.

4. Procédé selon la revendication 2, **caractérisé en ce que** l'ensemble limité de champs de mesure ne comprend qu'une zone non imprimée sur le support.

5. Procédé selon l'une des revendications précédentes, **caractérisé en ce que**, pour le calcul (236) de la partie de correction spectrale $R_{iUVpass}(\lambda)$, on détermine la transmission UV des couches de peinture de l'échantillon, à partir de la première partie spectrale $R_{iUVpass}(\lambda)$.

6. Procédé selon la revendication 5, **caractérisé en ce que** la détermination de la transmission UV des couches de peinture a lieu par extrapolation, ou à l'aide d'une table de conversion.

7. Procédé selon l'une des revendications précédentes, **caractérisé en ce que** le modèle de correction se fonde sur les théories de Kubelka-Munk, de Saunderson et éventuellement de Neugebauer.

8. Procédé selon l'une des revendications précédentes, **caractérisé en ce qu'**on détermine deux ou plusieurs facteurs de réflexion spectrale totale $R_i(\lambda)$, en calculant deux ou plusieurs parties de correction spectrale $R_{iUVpass}(\lambda)$ pour deux ou plusieurs illuminants sélectionnés, en prenant en compte les données de caractérisation du support, à partir de la première partie spectrale $R_{UVsperr}(\lambda)$.

9. Procédé selon l'une des revendications précédentes, **caractérisé en ce que** les données de caractérisation (121) du substrat ou de l'agent d'azurage qui y est contenu sont déterminées par des mesures à l'aide d'un appareil de mesure distinct, 1 ou encore on utilise des données de caractérisation connues (121) du support pour le calcul de la partie de correction spectrale $R_{iUVpass}(\lambda)$.

**Fig. 1**

Probenmessung im
UV-Sperrfilter-Modus

100

Messwerte L(λ)
(spektrale Leuchtdichte)

101

Charakterisierungsdaten des Substrats

\121

Lichtart(en)
$E_i(λ)$

122

123

Konventionelle Berechnung
des spektralen Reflexionsfaktors $R_{Uvsperr}(λ)$ aus $L(λ)$

110

Berechnung des Fluoreszenz-bedingten
Beitrags $R_{iUVpass}(λ)$
für ausgewählte Lichtart(en) $E_i(λ)$
mit UV-Anteil

120

130

Korrektur pro Lichtart $E_i(λ)$ durch Addition
$R_i(λ) = R_{UVsperr}(λ) + R_{iUVpass}(λ)$

Totale(r) Fluoreszenz-korrigierte(r) spektrale(r)
Reflexionsfaktor(en) $R_i(λ)$ für ausgewählte
Lichtart(en) $E_i(λ)$

140

Konventionelle Auswertung bzw. Weiterverarbeitung für Mess- und Steuerungszwecke

150

# Fig. 2

Substratmessung im
UV-Passfilter-Modus — 222

221 — Substratmessung im
UV-Sperrfilter-Modus

228

Aufheller-
Ausbeute α(λ)

227

Bestrahlungsstärke E$_{UV}$(λ)

229

Lichtart
E$_i$(λ)

226

Korrekturfaktor
K(λ)

Messwerte
L$_{WUVpass}$(λ)

Berechnung
R$_{iWUVpass}$(λ)

Messwerte
L$_W$(λ)

224

225

223

234

Berechnung
R$_{UVsperr}$(λ)

Berechnung
R$_{iUVpass}$(λ)

Berechnung
R$_{WUVsperr}$(λ)

233

Modellparameter
cfd, cfu, r0, r2, α0

Messwerte
L(λ)

236

235

232

120

Probenmessung im
UV-Sperrfilter-Modus — 231

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6844931 B
- US 20070086009 A1
- EP 1775565 A1
- US 20020135768 A
- JP 2006084333 A